(19) Europäisches Patentamt / European Patent Office / Office européen des brevets

(11) **EP 4 336 408 A1**

(12) **EUROPEAN PATENT APPLICATION**
published in accordance with Art. 153(4) EPC

(43) Date of publication:
**13.03.2024 Bulletin 2024/11**

(21) Application number: **21939707.2**

(22) Date of filing: **07.05.2021**

(51) International Patent Classification (IPC):
**G06N 3/04** (2023.01)

(52) Cooperative Patent Classification (CPC):
**G06N 3/04**

(86) International application number:
**PCT/CN2021/092232**

(87) International publication number:
**WO 2022/233061 (10.11.2022 Gazette 2022/45)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **XIAO, Han
Dongguan, Guangdong 523860 (CN)**
• **TIAN, Wenqiang
Dongguan, Guangdong 523860 (CN)**

(74) Representative: **Novagraaf Technologies
Bâtiment O2
2, rue Sarah Bernhardt
CS90017
92665 Asnières-sur-Seine Cedex (FR)**

(54) **SIGNAL PROCESSING METHOD, COMMUNICATION DEVICE, AND COMMUNICATION SYSTEM**

(57) Embodiments of the present application provide a signal processing method, a terminal device, and a network device, which are applied in the technical field of communications. The embodiments of the present application comprise: acquiring a signal to be processed; using said signal as an input and label of a signal processing model, and performing online training and fine-tuning on the signal processing model to obtain an optimized signal processing model; and inputting said signal into the optimized signal processing model, and acquiring a target signal output by the optimized signal processing model.

FIG. 10

**EP 4 336 408 A1**

## Description

## TECHNICAL FIELD

The present disclosure relates to a technical field of communications, and in particular to a signal processing method, a communication device, and a communication system.

## BACKGROUND

Channel environments in communication systems are increasingly complex, signal processing devices become more and more diverse, and algorithms in the communication systems also have high-level complexity. Thus, neural network models based on AI are employed to process signals to simplify signal processing processes in the communication systems. However, the neural network models themselves have inherent disadvantage of generalization problems in practical applications, which leads to trained neural network models being only applicable to application scenarios having the same characteristics as training sets, i.e., unitary applicable scenarios.

## SUMMARY OF THE DISCLOSURE

Embodiments of the present disclosure provide a signal processing method, a communication device, and a communication system, such that a problem of neural network model being only applicable to application scenarios having the same characteristics as training sets, i.e., unitary applicable scenarios, may be resolved.

In a first aspect, a signal processing method is provided and comprises acquiring a to-be-processed signal; taking the to-be-processed signal as an input and a label of a signal processing model, performing an online training fine-tuning process for the signal processing model, and obtaining an optimized signal processing model; and inputting the to-be-processed signal into the optimized signal processing model, and obtaining a target signal output by the optimized signal processing model.

In a second aspect, a communication device is provided and comprises a memory, storing executable program codes; and a processor, coupled to the memory; wherein the processor is configured to: acquire a to-be-processed signal; take the to-be-processed signal as an input and a label of a signal processing model, perform an online training fine-tuning process for the signal processing model, and obtain an optimized signal processing model; and input the to-be-processed signal into the optimized signal processing model, and obtain a target signal output by the optimized signal processing model.

In a third aspect, a communication device is provided and comprises an acquisition module, configured to acquire a to-be-processed signal; a training module, configured to take the to-be-processed signal as an input and a label of a signal processing model, perform an online training fine-tuning process for the signal processing model, and obtain an optimized signal processing model; and a processing module, configured to input the to-be-processed signal into the optimized signal processing model, and obtaining a target signal output by the optimized signal processing model.

In a fourth aspect, a communication system is provided and comprises a receiver; and a transmitter; wherein the receiver is configured to implement the method according to the first aspect and/or the transmitter is configured to implement the method according to the first aspect.

In a fifth aspect, a computer-readable storage medium is provided and comprises computer instructions, wherein when the computer instructions are run on a computer, the computer is caused to perform the method as the implementation manner of the first aspect.

In a sixth aspect, a computer program product is provided and includes computer instructions, wherein when the computer program product is run on a computer, the computer is caused to perform the method as the implementation manner of the first aspect.

In a seventh aspect, a chip is provided and coupled to a memory in a terminal device to cause the chip to call program instructions stored in the memory during running, enabling the terminal device to perform the method as the implementation manner of the first aspect.

Embodiments of the present disclosure provide a signal processing method. The communication device may acquire a to-be-processed signal; the to-be-processed signal is taken as an input and a label of a signal processing model, an online training fine-tuning process is performed for the signal processing model to acquire an optimized signal processing model; and the to-be-processed signal is input into the optimized signal processing model to obtain a target signal output by the optimized signal processing model. Through this scheme, before the communication device processes the to-be-processed signal, the communication device may firstly perform the online training fine-tuning process for the signal processing model through the to-be-processed signal, and inputs the to-be-processed signal into the optimized signal processing model to be processed after obtaining the optimized signal processing model through the fine-tuning to obtain more accurate target signal. In such a signal processing manner, since the signal processing model may be fine tuned in real time, a fine-tuned signal processing model is appliable to any communication scenario. Thus, this signal processing method may be performed in any communication scenario.

## BRIEF DESCRIPTION OF THE DRAWINGS

FIG. 1 is a schematic view of a basic operating flow of a wireless communication system according to some embodiments of the present disclosure.

FIG. 2 is a schematic view of a channel estimation and recovery process according to some embodiments of the present disclosure.

FIG. 3 is a schematic view of a basic structure of a neural network according to some embodiments of the present disclosure.

FIG. 4 is a schematic view of a convolutional neural network according to some embodiments of the present disclosure.

FIG. 5 is a schematic view of a channel estimation process of the neural network according to some embodiments of the present disclosure.

FIG. 6 is a schematic view of a channel feedback process of the neural network according to some embodiments of the present disclosure.

FIG. 7 is a schematic view of a channel information feedback system according to some embodiments of the present disclosure.

FIG. 8 is a schematic view of a communication system according to some embodiments of the present disclosure.

FIG. 9 is a schematic view of a transmission period and a feedback period in the communication system according to some embodiments of the present disclosure.

FIG. 10 is a schematic view of a signal processing method according to some embodiments of the present disclosure.

FIG. 11 is an implementation schematic view of performing an online training fine-tuning process for a channel feedback model according to some embodiments of the present disclosure.

FIG. 12 is an implementation schematic view of performing the online training fine-tuning process for an AI-based joint coding modulation model according to some embodiments of the present disclosure.

FIG. 13 is an implementation schematic view of performing the online training fine-tuning process for an AI pilot frequency design and insertion model according to some embodiments of the present disclosure.

FIG. 14 is a schematic view of a mode with a traditional transmission + an online-learning type channel feedback according to some embodiments of the present disclosure.

FIG. 15 is a schematic view of a mode with a joint coding modulation model online-learning type transmission + a traditional type channel feedback according to some embodiments of the present disclosure.

FIG. 16 is a schematic view of a mode with a pilot frequency design and insertion model online-learning type transmission + the traditional type channel feedback according to some embodiments of the present disclosure.

FIG. 17 is a schematic view of a mode with the joint coding modulation model and the pilot frequency design and insertion model joint online learning + the traditional type channel feedback according to some embodiments of the present disclosure.

FIG. 18 is a schematic view of a mode with the joint coding modulation model online learning + a learning type channel feedback according to some embodiments of the present disclosure.

FIG. 19 is a schematic view of a mode with the pilot frequency design and insertion model online learning + the learning type channel feedback according to some embodiments of the present disclosure.

FIG. 20 is a schematic view of a mode with the joint coding modulation model and the pilot frequency design and insertion model joint online learning + the learning type channel feedback according to some embodiments of the present disclosure.

FIG. 21A is a structural schematic view 1 of a communication device according to some embodiments of the present disclosure.

FIG. 21B is a structural schematic view 2 of the communication device according to some embodiments of the present disclosure.

FIG. 22 is a structural schematic view 3 of a communication device according to some embodiments of the present disclosure.

FIG. 23 is a schematic view of a communication system architecture according to some embodiments of the present disclosure.

## DETAILED DESCRIPTION

Technical schemes of the embodiments of the present disclosure will be described below in conjunction with accompanying drawings in the embodiments of the present disclosure. Apparently, described embodiments are a part but not all of the embodiments of the present disclosure. Other embodiments obtained by one of ordinary skill in the related art based on the embodiments of the present disclosure without any creative labor shall all fall into the scope of the present disclosure.

In the embodiments of the present disclosure, terms "exemplary" or "for example" or the like, are used to indicate an example, instance or illustration. Any embodiment or design solution described with "exemplary" or "for example" in the embodiments of the present disclosure should not be construed to be more preferrable or have more advantage than other embodiments or design solutions. Rather, the terms "exemplary" or "for example" are intended to present relevant concepts in a specific manner.

The term "and/or" herein is only used to describe an associated relationship of associated objects, which indicates that three relationships may exist therein. For example, A and/or B, may indicate: A exists alone, both A and B exist, and B exists alone. The symbol "/" indicates that the associated objects have an "or" relationship, e.g., A/B indicates A or B.

Relevant technologies and terms involved in the embodiments of the present disclosure are briefly described in the following.

1. A whole description of a wireless communication system

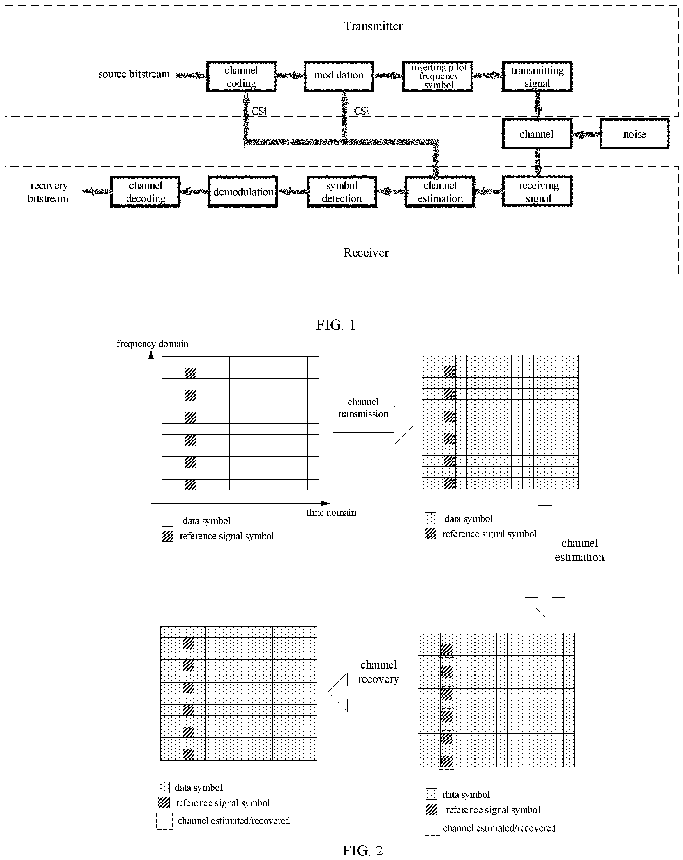

As shown in FIG. 1, FIG. 1 shows a basic operating flow of the wireless communication system. A primary flow includes the following.

A transmitter (i.e., a transmitting side device) performs a channel coding process and a modulation process for a source bitstream to obtain a modulation symbol. Then, a pilot frequency symbol may be inserted into an obtained modulation symbol for a channel estimation and a symbol detection at a receiving side. Finally, a transmitting signal is formed and reaches the receiving side through a channel.

The receiver (i.e., a receiving side device) receives the signal and performs the channel estimation through the pilot frequency, and then feeds channel information back to the transmitter through a feedback link for the transmitter to adjust a channel coding manner, a modulation manner, and a precoding manner, etc. Finally, the receiver obtains a final recovery bitstream through a process such as the symbol detection, a demodulation process, and a channel decoding process, etc. The channel information involved in the embodiments of the present disclosure may be Channel-State Information (CSI).

FIG. 1 is a simple schematic view of the basic operating flow of the wireless communication system. A traditional communication system may include other unlisted modules and operating flows. For example, the traditional communication system may include function modules such as resource mapping, precoding, interference cancellation, CSI measurement, etc. These modules may be separately designed and implemented, and these independent modules may form a complete wireless communication system after being integrated.

2. Channel Estimation

Due to the complexity and time-varying characteristics of a wireless channel environment, in the wireless communication system as shown in FIG. 1, an estimation and a recovery of the receiver for a wireless channel directly affects a data recovery performance of the final recovery bitstream.

A current channel estimation and recovery process in the communication system are as shown in FIG. 2.

For a channel transmission phase: in addition to information data symbols (i.e., data symbols as shown in FIG. 2), the transmitter also transmits a series of particular pilot frequency symbols known to the receiver (i.e., reference signal symbols shown in FIG. 2) on a time-frequency resource, such as a Channel-State Information Reference Signal (CSI-RS), a Demodulation Reference Signal (DMRS), etc.

For a channel estimation phase: the receiver may estimate the channel information on a position of a reference signal based on a true pilot frequency and a received pilot frequency through a least square method (also referred to be a LS method).

For a channel recovery phase: the receiver recovers the channel information on a full time-frequency resource based on the channel information estimated at a pilot frequency position through an interpolation algorithm, for a subsequent channel information feedback or data recovery, etc.

3. Channel feedback

For a 5G New Radio (NR) system, in a current CSI feedback design, a codebook-based scheme is primarily employed to achieve an extraction and feedback of a channel feature. That is, after the transmitting side performs the channel estimation, a precoding matrix matching a current channel is selected from a preconfigured precoding codebook based on a result of the channel estimation in accordance with an optimized criterion, an index information Precoding Matrix Indicator (PMI) is fed back to a receiving side through the feedback link of a radio for the receiving side to achieve precoding, and a Channel Quality Indication (CQI) obtained through measurement back to the receiving side for the receiving side to achieve adaptive modulation coding, or the like.

4. Neural Networks

In recent years, artificial intelligence researches represented by neural networks (NN) have achieved significant results in many fields, and will also play an important role in the production and life of people for a long time in the future.

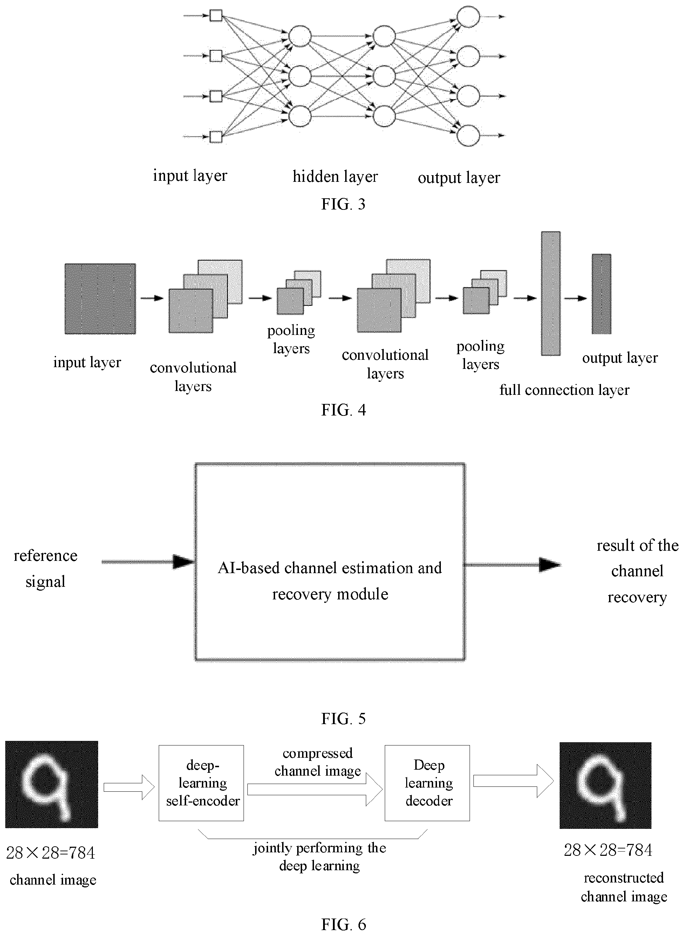

As shown in FIG. 3, a basic structure of a neural network includes an input layer, a hidden layer, and an output layer. The input layer is configured to receive data, the hidden layer is configured to process the data, and a final result is generated in the output layer. Each node herein represents a processing unit, which may be considered as a simulation of a neuron. Multiple neurons form a layer of neural networks, and multiple layers of information transferring and processing construct a whole neural network.

With continuous developments of neural network researches, a neural-network deep learning algorithm has been proposed in the recent years. More hidden layers are introduced, a neural network having multiple hidden layers is trained layer by layer to perform a feature learning process, which significantly improves a learning and processing capabilities of the neural network and is widely applied in an aspect such as mode distinguishing, signal processing, optimizing combinations, anomaly detection, or the like.

Similarly, with the development of deep learning, Convolutional Neural Networks (CNN) have also been proposed in the recent years. As shown in FIG. 4, FIG. 4 is a schematic view of a convolutional neural network. A basic structure of the convolutional neural network includes an input layer, multiple convolutional layers, multiple pooling layers, a full connection layer, and an output layer. In the convolutional neural network, the introduction of the convolutional layers and the pooling layers effectively controls a drastic increase of network parameters, restricts the number of parameters and taps into characteristics of local structures, and improves robustness of the algorithm.

5. the channel estimation based on the neural network

In the related art, an existing channel estimation based on the neural network considers to employ the Artificial Intelligence (AI) to achieve the channel estimation and recovery. As shown in FIG. 5, FIG. 5 is a schematic view of the channel estimation process of the neural network. The reference signal is input into an AI-based channel estimation and recovery module and information is output. Output information is a result of the channel estimation and recovery (i.e., a channel recovery result in FIG. 5). It should be noted that input information of the AI-based channel estimation and recovery module may be other assistance information in addition to the reference signal, so as to improve a performance of the AI-based channel estimation and recovery module. For example, these other assistance information may be feature extraction information, energy level information, delay feature information, noise feature information, etc., for the reference signal.

6. The channel feedback based on the neural network

In view of the great success of the AI technology in an aspect such as computer vision, natural language processing, etc., in the communication field, the AI technology is attempted to be employed to seek new technical ideas (such as the deep learning) to solve technical difficult problems to which the conventional methods are limited. A neural network architecture commonly used in the deep learning is nonlinear and data-driven, which may perform a feature extraction process for actual channel matrix data and restore channel matrix information compressed fed back by a User Equipment (UE) side as much as possible at a base station side. In this way, the channel information is ensured to be restored, while a possibility is provided to reduce a CSI feedback overhead at the UE side.

As shown in FIG. 6, FIG. 6 is a schematic view of a channel feedback process of the neural network. The information may be regarded as a to-be-compressed channel image, for example, the channel image is a $28 \times 28 = 784$ image. The channel information is compressed by means of a deep-learning self-encoder and then a compressed channel image is fed back to an opposite side device of a current device, and the compressed channel image is reconstructed in the opposite side device, such that the channel information may be preserved to a larger extent. A reconstructed channel image is obtained.

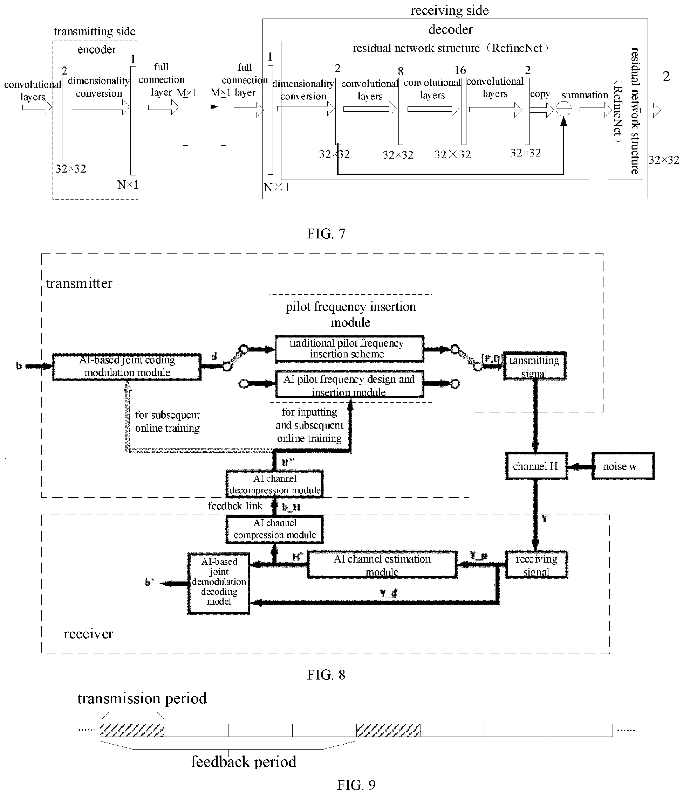

As shown in FIG. 7, FIG. 7 is a schematic view of a channel information feedback system. The channel information feedback system is divided into an encoder part and a decoder part. The encoder is deployed at the transmitting side (e.g., the receiver shown in FIG. 1) and the decoder is deployed at the receiving side (e.g., the transmitter shown in FIG. 1). After the transmitting side obtains the channel information through the channel estimation, the convolutional layers in the neural network of the encoder are configured to convolve the channel information matrix to obtain a $32 \times 32$ coding matrix. Subsequently, a $N \times 1$ coding matrix is obtained through a dimensionality conversion process. The $N \times 1$ coding matrix is then converted into an $M \times 1$ coding matrix after being further compressed through the full connection layer, M is less than N, and a compression coding process is completed. A bitstream after the compression coding process is fed back to the receiving side through the feedback link of the radio. The receiving side recovers the channel information through the decoder based on a fed bitstream to obtain complete feedback channel information. In an embodiment, the received $M \times 1$ coding matrix may be recovered into a $N \times 1$ feature map, and the $N \times 1$ feature map is then converted into a $32 \times 32$ feature map coding matrix. A convolution process and a summation process are performed for the $32 \times 32$ feature map coding matrix, and the convolution process and the summation process are repeated to obtain recovered channel information and output the recovered channel information. As shown in FIG. 7, a number of full connection layers in the encoder may be configured to code, while the decoder employs a residual network structure to decode. In a case of coding and decoding frameworks being unchanged, internal network model structures of the encoder and the decoder may be flexibly designed.

Traditional communication systems and theories embody a number of limitations, for example:

1. Channel modeling on which the traditional communication systems designs are based fails to portray well an increasingly complex channel environment caused by large-scale antennas, underwater communications, millimeter waves, etc.

2. In the traditional communication systems, since more and more diverse combination application of signal processing devices brings some nonlinear features to signaling processes. Traditional signal processing methods based on mathematical modeling are becoming more unable to better meet current high-reliability communication requirements.

3. In the traditional communication systems, iterative algorithms such as the symbol detection, have higher complexity, which fails to well satisfy current high-speed communication requirements.

In an embodiment, an AI-based side-to-side transmitter and receiver may solve the above problems of the traditional communication systems to a certain extent. However, such side-to-side designs are often purely data-driven. That is, the transmitter and receiver are respectively integrated and black-boxed, which requires a large amount of data and a longer period of time for training and construction. The acquisition of massive datasets and long time for training are more difficult in current wireless communication systems.

Further, in another embodiment, an AI-based modular communication system design considers a data and model dual drive, which may make good use of a priori structure of an original communication system model and flexibly adjust and train for each module. For example, independent neural network models are separately designed for the channel estimation, the modulation coding, etc., such that requirements of large data set and long training time are reduced. However, the neural network models themselves have inherent disadvantage of generalization problems in practical applications, which leads to trained neural network models being only applicable to application scenarios having the same characteristics as training sets. Whereas the training sets usually fail to contain all cases, when the scenario characteristics are changed, the trained neural network models are difficult to continue to maintain a good generalization performance.

In the embodiments of the present disclosure, the above problem may be solved through an online learning method, which may include the following phases.

(1) a model online fine-tuning optimization phase:

A to-be-processed signal is taken as an input and a label of a signal processing model, and an online training fine-tuning process is performed for the signal processing model and an optimized signal processing model is obtained. The signal processing model is a pretrained model.

(2) A phase of processing the signal using the optimized model:

The to-be-processed signal is input into the optimized signal processing model and a target signal output by the optimized signal processing model is obtained. The target signal obtained in this way may be a more accurate output signal.

In the embodiments of the present disclosure, a communication device may acquire the to-be-processed signal, take the to-be-processed signal as the input and the label of the signal processing model, perform the online training fine-tuning process for the signal processing model, and obtain the optimized signal processing model, and input the to-be-processed signal into the optimized signal processing model, and obtain the target signal output by the optimized signal processing model. Through this scheme, before the communication device processes the to-be-processed signal, the communication device may firstly perform the online training fine-tuning process for the signal processing model through the to-be-processed signal, and inputs the to-be-processed signal into the optimized signal processing model to be processed after obtaining the optimized signal processing model through the fine-tuning to obtain more accurate target signal. In such a signal processing manner, since the signal processing model may be fine tuned in real time, a fine-tuned signal processing model is appliable to any communication scenario. Thus, this signal processing method may be performed in any communication scenario.

In the embodiments of the present disclosure, the communication device may be the receiver or the transmitter. In an embodiment, the receiver may be a terminal device or a network device. The transmitter may also be the terminal device or the network device.

The terminal device may be a STATION (ST) in WLAN, or may be a cellular phone, a cordless phone, a session initiation protocol (SIP) phone, a wireless local loop (WLL) station, a personal digital assistant (PDA), a handheld device with a wireless communication capability, a computing device, or other processing devices connected to a wireless modem, an in-vehicle device, a wearable device, a terminal device in a next generation communication system such a NR network, or a terminal device in a future evolved public land mobile network (PLMN), or the like.

In the embodiments of the present disclosure, the terminal device may be deployed on land which includes indoor or outdoor, handheld, wearable, or vehicle-mounted cases. The terminal device may also be deployed on water (e.g., a ship, etc.), and may also be deployed in the air (e.g., on an aircraft, a balloon, or a satellite, etc.).

In the embodiments of the present disclosure, the terminal device may be a Mobile Phone, a Pad, a computer with a wireless transceiving function, a virtual reality (VR) terminal device, an augmented reality (AR) terminal device, a wireless terminal device under an industrial control, a wireless terminal device in self driving, a wireless terminal devices in a remote medical, a wireless terminal device in a smart grid, a wireless terminal devices in transportation safety, and a wireless terminal device in a smart city or a wireless terminal device in a smart home, etc.

As an example, not a limitation, in the embodiments of the present disclosure, the terminal device may also be the wearable device. The wearable device may also be referred to as a wearable smart device, which is a general term of wearable devices obtained by intelligently designing and developing daily wears, such as glasses, gloves, watches, clothing, and shoes, by means of wearable techniques. The wearable devices are directly worn on a body or integrated into the clothing or an accessory of the user as a portable device. The wearable devices are more than hardware devices, may also achieve powerful functions thereof through software supports, data interactions, and cloud interactions. The wearable smart device in a broad sense includes a device having full features, a large size, and capable of achieving entire or partial functions independent of a smartphone, e.g., a smart watch, or smart glasses, etc., and a device only concentrating on a particular category of application function and required to cooperate with other devices such as the smartphone, e.g., various smart bracelets configured to monitor signs, a smart jewelry, or the like.

In the embodiments of the present disclosure, the network device may be a device configured to communicate with the terminal device. The network device may be an Access Point (AP) in the WLAN, a base transceiver station (BTS) in a GSM or CDMA system, or a NodeB (NB) in a WCDMA system, or an evolutional NodeB (eNB or eNodeB) in the LTE system, or may be a relay station, the access point, the in-vehicle device, the wearable device. and a network device (gNB) in the NR network, or a network device in the future evolved PLMN network, or a network device in a NTN network.

As an example, not a limitation, in the embodiments of the present disclosure, the network device may have a mobile characteristic. For example, the network device may be a mobile device. In an embodiment, the network device may be a satellite, a balloon station. For example, the satellite may be a Low Earth Orbit (LEO) satellite, a medium earth orbit (MEO) satellite, a geostationary earth orbit (GEO) satellite, a High Elliptical Orbit (HEO) satellite, etc. In an embodiment, the network device may also be a base station installed on a location such as the land, the water, etc.

In the embodiments of the present disclosure, the network device may provide service for a cell. The terminal device communicates with the network device through a transmission resource (e.g., a frequency domain resource, or in other words, a spectrum resource) employed by the cell. The cell may be a cell corresponding to the network device (such as, the base station). The cell may belong to a macro base station or a base station corresponding to a small cell. The small cell herein may include a Metro cell, a Micro cell, a Pico cell, a Femto cell, etc. These small cells have characteristics of a small coverage area and a low transmission power, and are suitable to provide a high-speed data transmission service.

As shown in FIG. 8, FIG. 8 is a schematic view of the communication system according to some embodiments of the present disclosure. The communication system is an AI-based model and data dual-drive communication system.

As shown in FIG. 8, the transmitter may input a source bitstream vector into a joint modulation module based on the neural network (AI), and output a coded and modulated symbol vector d. Further, a matrix X = [P; D] including the pilot frequency symbols and the data symbols is obtained through a pilot frequency insertion module. The pilot frequency insertion module may select a traditional pilot frequency insertion scheme or an AI pilot frequency design and insertion module.

In some embodiments, in a case of selecting the traditional pilot frequency insertion scheme, the pilot frequency may be placed on an allocated time-frequency resource based on a pilot frequency sequence and an insertion pattern which are preconfigured by a system, and the data symbols are placed on the rest.

In some embodiments, in a case of selecting an AI-based pilot frequency design and insertion module, an input of a neural network model in the AI-based pilot frequency design and insertion module is the channel matrix H" fed back by the feedback link, an output thereof is the pilot frequency sequence and a position code corresponding to each symbol in the sequence. The AI-based pilot frequency design and insertion module further inserts the pilot frequency symbols into the allocated time-frequency resource according to the code, and the data symbols are placed on the rest. The output of the pilot frequency insertion module is transmitted to the receiver through the radio after a series of signal processing processes, and a signal received by the receiver is Y

$$Y = HX + N$$
$$= H[P; D] + N$$
$$= [H\_p, 0; 0, H\_d][p; d] + W$$
$$= [Y\_p; Y\_d]$$

X is all symbols transmitted by the transmitter, p is a pilot frequency symbol vector, d is a data symbol vector, H_p and H_d are channel information corresponding to a position of the pilot frequency and a position of the data symbol, respectively, Y_p = H_p * p and Y_d = H_d * d are a pilot frequency signal and a data signal, respectively, and W is an additive noise.

Further, in FIG. 8, after receiving the above signal Y, the receiver inputs the pilot frequency signal Y_p into the channel estimation module and outputs estimated channel information H' on a full time-frequency resource. Finally, the receiver inputs the estimated full channel information H' and the received data signal Y_d into an AI-based joint demodulation decoding module. An output of the AI-based joint demodulation decoding module is a final receiving bitstream b'.

Further, in FIG. 8, after the full channel information H' is obtained through the channel estimation, the channel information H' may be encoded and compressed through an AI channel compression module to obtain a bitstream vector b_H. The bitstream vector b_H is fed back to the transmitter through the feedback link. The transmitter decodes and recovers the channel information through an AI channel decompression module to obtain a recovered channel information H". The channel information H" may be configured as the input of the AI pilot frequency design and insertion module. The channel information H" may also be configured for online training of an AI-based joint coding modulation module.

It is to be noted that the embodiments covered by the present disclosure are primarily elaborated with respect to the online learning of a system model, i.e., a scheme of online fine-tuning adaptive training of an AI model in the system. It may be considered that each AI-based basic model in the communication system of the present disclosure has been pre-trained.

In some embodiments, in the communication system in some embodiments of the present disclosure (e.g., the communication system shown in FIG. 8), the transmitter transmits a signal to the receiver once in each transmission period, and the receiver may feed the channel information to the transmitter once in each transmission period.

In some embodiments, in each transmission period, the transmitter transmits the signal to the receiver once in each transmission period, and the receiver may feed the channel information to the transmitter once in a plurality of transmission periods.

As shown in FIG. 9, FIG. 9 is a schematic view of the transmission period and a feedback period in the communication system. FIG. 9 is illustrated with an example in which the transmitter feeds back the channel information to the receiver once in every four transmission periods. That is, the feedback period is four times the transmission period.

In the communication system of this embodiment, a transmission manner of the transmitter transmitting the signal to the receiver may be categorized into an online-learning type transmission and a traditional transmission. A case in which the transmitting side is required to perform an online-learning fine-tuning process for one or more signal processing models of the transmitting side before transmission, is defined as the online-learning type transmission. Otherwise, the transmission is defined as the traditional transmission. For example, the one or more signal processing models described above may be any one of: the AI-based joint coding modulation module, the AI pilot frequency design and insertion module, the AI channel decompression module, the AI channel compression module, the AI-based joint demodulation decoding module, and an AI channel estimation module in FIG. 8.

In some embodiments, during an entire transmission process, whether the transmission and feedback select a learning type or a traditional type may be flexibly configured according to an actual transmission environment, delay requirements, and complexity requirements. This scheme may improve overall adaptability of an AI-based communication system to the environment. That is, the higher the configuration proportion of the learning-type transmission or feedback is, the stronger the adaptability of the system is.

The channel information in the embodiments of the present disclosure includes the channel information.

It is to be noted that the transmitting side in the embodiments of the present disclosure may refer to the transmitter or the receiver, and the receiving side may also refer to the transmitter or the receive. For the transmitter and the receiver, an actively transmitting side may be determined as the transmitting side, while a passively receiving side may be determined as the receiving side. For example, when the transmitter transmits the signal after the pilot frequency insertion to the receiver, the transmitter is the transmitting side, while the receiver is the receiving side. When the receiver feeds the channel information back to the transmitter, the receiver is the transmitting side, and the transmitter is the transmitting side.

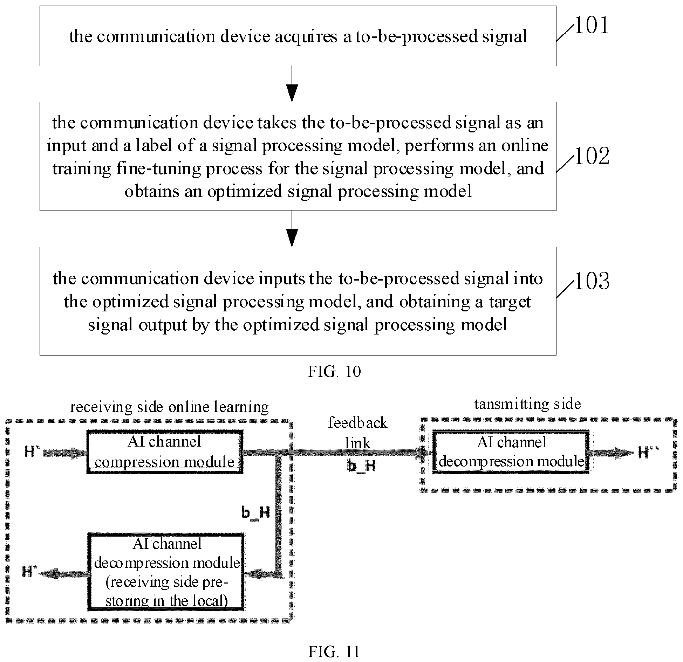

As shown in FIG. 10, a signal processing method is provided in the embodiments of the present disclosure. The method includes operations 101-103.

In an operation 101, the communication device acquires a to-be-processed signal.

In an operation 102, the communication device takes the to-be-processed signal as an input and a label of a signal processing model, performs an online training fine-tuning process for the signal processing model, and obtains an optimized signal processing model.

In the embodiments of the present disclosure, the communication device is preconfigured with a channel simulation module and a target processing module. The target processing module is configured to simulate an opposite side device of the communication device to restore the to-be-processed signal, the channel simulation module is configured to simulate a channel environment, and a signal output by the communication device is transmitted to the target processing module through the channel simulation module.

In the embodiments of the present disclosure, the channel simulation module may be configured to simulate the channel environment through which the signal transmission between the transmitter and the receiver passes. Normally, a signal attenuation may be generated when the signal transmission passes through the channel environment. In the embodiments of the present disclosure, in order to restore the signal in the local of the communication device, the channel simulation module is required to simulate the channel environment, such that the signal attenuation generated during the signal output by the communication device being transmitted to the target processing module through the channel simulation module is in accordance with an actual situation. In this way, a restored to-be-processed signal may be closer to an actual transmission situation between the transmitter and the receiver, a restoring level of the to-be-processed signal may be improved, and a more accurate signal may be obtained.

In some embodiments, the channel simulation module may be configured based on historical channel information. The historical channel information is the channel information fed back by the feedback link in the $n^{th}$ transmission period prior to a current transmission period, and n is greater than or equal to 1.

In some embodiments, when the transmitting side transmits the signal to the receiving side once in each transmission period, and the receiving side may feed the channel information back to the transmitting side once in each transmission period. In this case, the channel simulation module may be determined based on the channel information fed back in a previous transmission period.

In some embodiments, when the transmitting side transmits the signal to the receiving side once in each transmission period, and the receiving side may feed the channel information back to the transmitting side once in the plurality of transmission periods. In this case, the channel simulation module may be channel information fed back by the feedback link in the $n^{th}$ transmission period prior to the current transmission period, and n is greater than or equal to 1.

In some embodiments of the present disclosure, the above signal processing model includes at least one of the following:

(1) a joint coding modulation model;
(2) a coding model;
(3) a modulation model;
The above (1) joint coding modulation model may achieve both a signal coding function and a signal modulation function, which may be the AI-based joint coding modulation module shown in FIG. 8. The above (2) coding model may independently achieve a signal coding function, and the above (3) modulation model may independently achieve a signal modulation function.
(4) a pilot frequency design and insertion model;
(5) a pilot frequency design model;
(6) a pilot frequency insertion model;
The above (4) pilot frequency design and insertion model may achieve both a pilot frequency design function and a pilot frequency insertion function, which may be the AI pilot frequency design and insertion module shown in FIG. 8. The above (5) pilot frequency design model may independently achieve the pilot frequency design function, and the above (6) may independently achieve the pilot frequency insertion function.
(7) a channel decompression model;
This model may be the AI channel decompression model shown in FIG. 8.
(8) a channel compression model;
This model may be the AI channel compression model shown in FIG. 8.
(9) a channel estimation model;
This model may be the AI channel estimation module.

(10) a demodulation decoding model;
(11) a demodulation model;
(12) a decoding model;
The above (10) demodulation decoding model may achieve both a signal demodulation function and a signal decoding function, which may be an AI-based connection demodulation decoding module as shown in the above FIG. 8. The above (11) demodulation model may independently achieve a signal demodulation function, and the above (12) decoding model may independently achieve a signal decoding function.
(13) a transmitter model;
The transmitter model indicates an AI neural network model which may achieve all functions of the transmitter. For example, the transmitter model may achieve a function of the transmitter, such as the signal coding, the signal modulation, the pilot frequency design, the pilot frequency insertion, etc.
(14) a receiver model

The receiver model indicates an AI neural network model which may achieve all functions of the receiver. For example, the receiver model may achieve a function of the receiver, such as the signal demodulation, the signal decoding, the channel estimation, the channel compression, etc.

In the embodiments of the present disclosure, involved models may refer to neural network models implemented based on the AI.

In the embodiments of the present disclosure, for different signal processing models, to-be-processed signals may also be different.

For example, signal processing models and the to-be-processed signals may include the following cases.

Case 1: The signal processing model is the channel compression model, and the to-be-processed signal is the channel information obtained by the channel estimation, i.e., first channel information in the embodiments of the present disclosure.

Case 2: The signal processing model is the joint coding modulation model, and the to-be-processed signal is the source bitstream.

Case 3: The signal processing model is a pilot frequency design and insertion model, and the to-be-processed signal is the historical channel information fed back by the feedback link.

In an operation 103: the communication device inputs the to-be-processed signal into the optimized signal processing model, and obtaining a target signal output by the optimized signal processing model.

In the embodiments of the present disclosure, the communication device may acquire the to-be-processed signal, take the to-be-processed signal as the input and the label of the signal processing model, perform the online training fine-tuning process for the signal processing model, and obtain the optimized signal processing model, and input the to-be-processed signal into the optimized signal processing model, and obtain the target signal output by the optimized signal processing model. Through this scheme, before the communication device processes the to-be-processed signal, the communication device may firstly perform the online training fine-tuning process for the signal processing model through the to-be-processed signal, and inputs the to-be-processed signal into the optimized signal processing model to be processed after obtaining the optimized signal processing model through the fine-tuning to obtain more accurate target signal. In such a signal processing manner, since the signal processing model may be fine tuned in real time, a fine-tuned signal processing model is appliable to any communication scenario. Thus, this signal processing method may be performed in any communication scenario.

In some embodiments, the operation 102 in which the to-be-processed signal is taken as the input and the label of the signal processing model, and the online training fine-tuning process is performed for the signal processing model and the optimized signal processing model is obtained, may include in response to a first parameter satisfying a preset condition, taking the to-be-processed signal as the input and the label of the signal processing model, performing the online training fine-tuning process for the signal processing model, and obtaining the optimized signal processing model.

The first parameter includes at least one of a channel parameter variation value, a delay requirement of the communication device, and a computational complexity requirement of the communication device.

In some embodiments, the first parameter satisfying the preset condition may include the first parameter satisfying at least one condition of: the channel parameter variation value detected by the communication device being greater than a preset variation value, a required delay of the communication device being greater than a preset delay and the computational complexity requirement of the communication device

The greater the channel parameter variation value is, it is indicated that the more unstable the channel is, and the more the signal processing model is required to be performed the online training fine-tuning process. The less the channel parameter variation value is, it is indicated that the more stable the channel is, and the less the signal processing model is required to be performed the online training fine-tuning process.

The channel parameter variation value described above may include at least one of: an average path loss, a large-scale fading value, a small-scale fading value, and a signal-to-noise ratio variation value.

In some embodiments, the communication device may detect the channel parameter variation value. The communication device, in response to the channel parameter variation value being greater than the preset variation value, may take the to-be-processed signal as the input and the label of the signal processing model, and perform the online training fine-tuning process for the signal processing model and obtain the optimized signal processing model.

The higher the delay requirement of the communication device (i.e., the shorter the required delay) is, the more the signal processing model is required to be performed the online training fine-tuning process. The lower the delay requirement of the communication device is, the less the signal processing model is required to be performed the online training fine-tuning process.

In some embodiments, when the required delay of the communication device is greater than the preset delay, the to-be-processed signal may be taken as the input and the label of the signal processing model, the online training fine-tuning process is performed for the signal processing model to obtain the optimized signal processing model.

The higher the computational complexity requirement of the communication device is (i.e., the less the required computational complexity is), the more the signal processing model is required to be performed the online training fine-tuning process. The lower the computational complexity requirement of the communication device is (i.e., the greater the required computational complexity is), the less the signal processing model is required to be performed the online training fine-tuning process.

In some embodiments, when the required computational complexity of the communication device is greater than a preset computational complexity, in a case of the channel parameter variation value being greater than the preset variation value, the to-be-processed signal may be taken as the input and the label of the signal processing model, the online training fine-tuning process is performed for the signal processing model to obtain the optimized signal processing model.

In the implementation manner described above, whether the transmission and feedback select the learning type or the traditional type may be flexibly configured according to the actual transmission environment, the delay requirements, and the complexity requirements, etc. This scheme may improve overall adaptability of the AI-based communication system to the environment. That is, the higher the configuration proportion of the learning-type transmission or feedback is, the stronger the adaptability of the system is.

Further, the specific number of operations of online learning in an online learning process may also be flexibly configured according to the actual transmission environment, the delay requirements, and the complexity requirements, etc., which are not limited herein.

In order to more clearly describe the scheme of the embodiments of the present disclosure, possible case 1, case 2, and case 3 described above are taken as examples for exemplary illustration in the following.

For the above case 1: the signal processing model is the channel compression model, the to-be-processed signal is the channel information obtained by the channel estimation, i.e., the first channel information in the embodiments of the present disclosure, and the communication device may be the receiver.

In an embodiment, the first channel information is taken as the input and the label of the channel compression model, the online training fine-tuning process is performed for the channel compression model and an optimized channel compression model is obtained. The first channel information is input into the optimized channel compression model, and a channel compression coding process is performed through the optimized channel compression model, and second channel information output by the optimized signal processing model is acquired.

The channel information described above may be also referred to as the channel information, or, the channel information. In some embodiments, the channel information described above may be the CSI.

Further, after acquiring compression coded channel information output by the optimized signal processing model, the method further includes transmitting the second channel information to the transmitter.

In some embodiments, in this case 1, the target processing module configured to simulate the channel decompression model in the transmitter is preconfigured in the communication device. In some embodiments, the target processing module has the same structure and parameter with the channel decompression model in the transmitter.

As shown in FIG. 11, FIG. 11 is an implementation schematic view of performing the online training fine-tuning process for a channel feedback model. For the above case 1, the local of the receiving side may pre-store the AI channel decompression module having the same structure and parameter with the transmitting side for the online learning at the receiving side before the channel feedback. After the receiving side performs the channel estimation and obtain the estimated channel H', the channel H' is taken as online training data to perform the online training fine-tuning process for the AI channel compression module (i.e., the channel compression model in the case 1 of the present disclosure). In an embodiment, the input of the AI channel compression module of the receiving side is the channel H', and the output bitstream b_H is fed to the AI channel decompression module pre-stored in the local. The channel H' is taken as an output label, and a side-to-side model is constructed. A side-to-side online optimizing training having few training steps may be performed for the above model.

Further, as shown in FIG. 11, after the AI channel compression module is updated online (i.e., obtaining an optimized channel compression module), a channel compression process may be performed through the updated optimized model. The result is fed back to the transmitting side through a real feedback link for the transmitting side to perform a channel decompression process and obtain the decompressed feedback channel H".

In some embodiments, weight parameters of the AI channel decompression module pre-stored in the local are required to be frozen during the side-to-side model training. That is, only weight parameters of the AI channel compression module are updated in the process of training.

In the above signal processing manner, since the channel compression model may be fine tuned in real time, a fine-tuned channel compression model is applicable to any communication scenario. Thus, this signal processing method may be performed in any communication scenario.

For the above case 2: the signal processing model is the joint coding modulation model, and the to-be-processed signal is the source bitstream. The communication device may be the transmitter.

In an embodiment, the source bitstream is taken as the input and the label of the joint coding modulation model, and the online training fine-tuning process is performed for the joint coding modulation model, and the optimized joint coding modulation model is obtained. The source bitstream is input into the optimized joint coding modulation model. The channel coding process and a signal modulation process are performed for the source bitstream through the optimized joint coding modulation model, and a modulation signal output by the optimized joint coding modulation model is acquired.

In another embodiment, at first, the source bitstream is taken as the input and the label of the joint coding modulation model, and the online training fine-tuning process is performed for the joint coding modulation model, and the optimized joint coding modulation model is obtained. The source bitstream is then input into the optimized joint coding modulation model. The channel coding process and a signal modulation process are performed for the source bitstream through the optimized joint coding modulation model, and the modulation signal output by the optimized joint coding modulation model is acquired. Secondly, both the modulation signal and the historical channel information are input into the pilot frequency design and insertion model, the historical channel information is taken as a label of the pilot frequency design and insertion model, and the online training fine-tuning process is performed for the signal processing model and an optimized pilot frequency design and insertion model is obtained. Further, both the modulation signal and the historical channel information are input into the optimized pilot frequency design and insertion model. A pilot frequency design and insertion process are performed for a coding modulated bitstream through the optimized pilot frequency design and insertion model, and pilot frequency information output by the optimized pilot frequency design and insertion model is acquired.

The pilot frequency information includes a pilot frequency sequence and a position code corresponding to each symbol of the pilot frequency sequence.

In some embodiments, in this case 2, the target processing module is preconfigured in the communication device, and the target processing module is configured to simulate the receiver corresponding to the transmitter. In an embodiment, the target processing module has the same structure and parameter as the receiver. That is, each model and parameter of a target processing link are the same with those of an entire transmission link.

In some embodiments, after the source bitstream is taken as the input and the label of the joint coding modulation model, and the online training fine-tuning process is performed for the joint coding modulation model, and the optimized joint coding modulation model is obtained, a transmitting signal may be obtained after the pilot frequency design and insertion process is performed for the modulation signal. The transmitting signal is transmitted to the receiver.

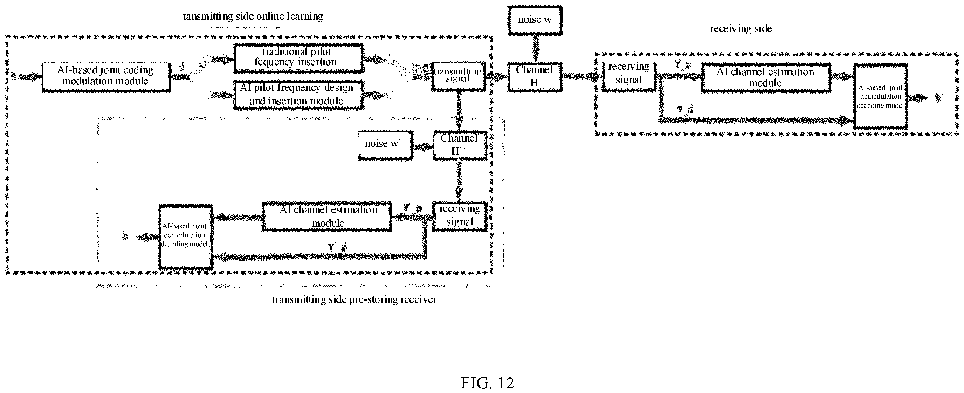

As shown in FIG. 12, FIG. 12 is an implementation schematic view of performing the online training fine-tuning process for an AI-based joint coding modulation module (i.e., the joint coding modulation model in the Case 2 of this embodiment). The local of the transmitting side may pre-store the receiver having the same structure and parameter as the receiving side for the transmitting side online learning before transmitting the signal. Equivalently, an entire transmission link is constructed at the local of the transmitting side, which may be considered as a side-to-side network model. An estimated radio channel is the channel information H" obtained in a previous channel feedback. A to-be-transmitted bitstream b is taken as an input and a label of the entire side-to-side model, and the side-to-side online optimizing training having few training steps may be performed for the above model.

Further, as shown in FIG. 12, after the AI-based joint coding modulation module is updated online, the to-be-transmitted bitstream may be modulated through an updated AI-based joint coding modulation module, and the signal is processed and transmitted through a subsequent corresponding transmitter module. A subsequent corresponding processing flow for a receiving signal is performed at the receiving side, and finally a receiving bitstream b' is obtained. Since an adaptive online training process is performed at the transmitting side, an accuracy of the receiving side recovering the receiving bitstream b' may be improved.

In some embodiments, weight parameters of other neural network models other than the AI-based coding modulation model are required to be frozen during the side-to-side model training. That is, only weight parameters of an AI-based coding modulation neural network model are updated in the process of training.

In the signal processing manner described above, since the joint coding modulation model may be fine tuned in real time, a fine-tuned joint coding modulation model is appliable to any communication scenario. Thus, this signal processing method may be performed in any communication scenario.

For the above case 3: the signal processing model is the pilot frequency design and insertion model, and the to-be-processed signal is the historical channel information fed back by the feedback link. The communication device in this case 3 may be the transmitter.

In an embodiment, the modulation symbol and the historical channel information are input into the pilot frequency design and insertion model, and the historical channel information is taken as the label of the pilot frequency design and insertion model. The online training fine-tuning process is performed for the pilot frequency design and insertion model to obtain the optimized pilot frequency design and insertion model. The modulation signal and the historical channel information are input into the optimized pilot frequency design and insertion model. The pilot frequency design and insertion process is performed for the coding modulated bitstream through the optimized pilot frequency design and insertion model, and the pilot frequency information output by the optimized pilot frequency design and insertion model is acquired. The pilot frequency information includes the pilot frequency sequence and the position code corresponding to each symbol of the pilot frequency sequence.

In some embodiments, the historical channel information is the channel information fed back by the feedback link in the $n^{th}$ transmission period prior to the current transmission period, and n is greater than or equal to 1.

In some embodiments, the communication device is preconfigured with the target processing module. The target processing module is configured to simulate a transmission module of the receiver from pilot frequency insertion to the channel estimation. In some embodiments, the target processing module has the same structure and parameter with the transmission module of the receiver from the pilot frequency insertion to the channel estimation. That is, each model of the target processing module and the transmission module of the receiver from the pilot frequency insertion to the channel estimation has the same structure and parameter.

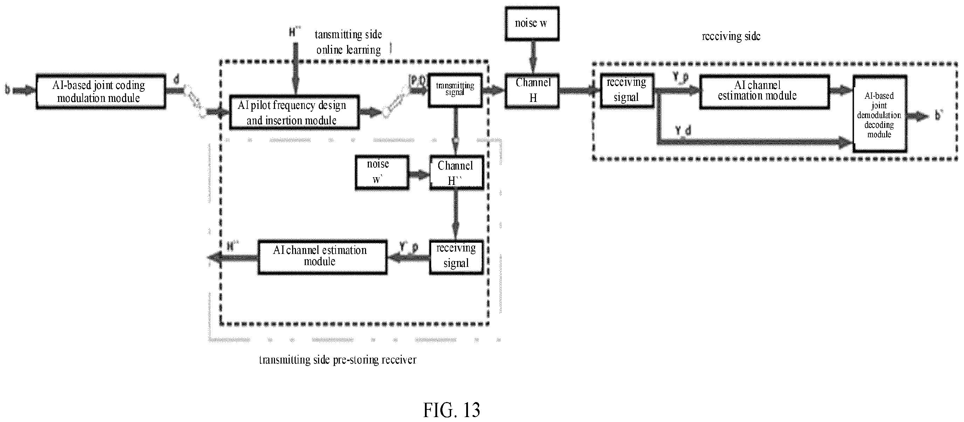

As shown in FIG. 13, FIG. 13 is an implementation schematic view of performing the online training fine-tuning process for the AI pilot frequency design and insertion model (i.e., the pilot frequency design and insertion model in the case 3 of the present disclosure). For the above case 3, the local of the transmitting side may pre-store the receiver having the same structure and parameter with the receiving side for the transmitting side to perform the online learning before transmitting the signal. It is equivalent that a transmission link from the pilot insertion to the channel estimation is constructed at the local of the transmitting side, which may be considered as the side-to-side network model. The estimated radio channel is the channel information H" obtained in the previous channel feedback. The channel information H" is taken as the input of the entire side-to-side model, i.e., as the input of the AI pilot frequency design and insertion module. In addition, the channel information H" is also taken as an output label of the channel estimation in a local simulated link, and the side-to-side online optimizing training having few training steps may be performed for the above model.

After the pilot frequency design and insertion model is updated online, the to-be-transmitted bitstream may be modulated through an updated pilot frequency design and insertion model, and the signal is processed and transmitted through the subsequent corresponding transmitter module. The subsequent corresponding processing flow for the receiving signal is performed at the receiving side. Since the adaptive online training process is performed at the transmitting side performs, an accuracy of the channel estimation of the receiving side may be improved, and an accuracy of a receiving bitstream b' ultimately obtained may be further improved.

In some embodiments, the weight parameters of other neural network models other than the AI pilot frequency design and insertion model are required to be frozen during the side-to-side model training. That is, only weight parameters of the AI pilot frequency design and insertion model are updated in the process of training.

In the signal processing manner described above, since the pilot frequency design and insertion module may be fine tuned in real time, a fine-tuned pilot frequency design and insertion module is appliable to any communication scenario. Thus, this signal processing method may be performed in any communication scenario.

In the communication system, at least one of the channel compression model, a joint coding modulation model, and a pilot frequency design and insertion model may be fine tuned in a manner of online learning, which may include the following embodiments.

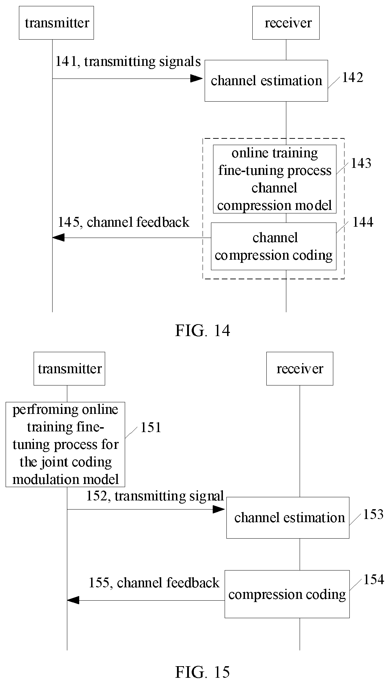

In an embodiment, a mode with a traditional transmission + an online-learning type channel feedback: As shown in FIG. 14, FIG. 14 is a schematic view of the mode with the traditional transmission + the online-learning type channel feedback. An implementation flow under this mode includes steps 141-145.

In a step 141, the transmitter first transmits signals to the receiving side, and the signals is the pilot frequency signal and the data signal.

In a step 142, the receiver receives the signals for the channel estimation and obtains estimated channel information.

In a step 143, the receiver performs the online training fine-tuning process with a smaller training step for the channel compression model through the estimated channel information and completes the online learning process.

In a step 144, the receiver performs the channel compression coding process through an online learning fine-tuned channel compression model.

In a step 145, the receiver transmits the compression coded channel information to the transmitter through the feedback link (i.e., the channel feedback).

In the embodiments of the present disclosure, the online-learning type channel feedback may refer to online-learning fine tuning of the channel compression model.

In the embodiments of the present disclosure, an online-learning type transmission may include online-learning fine tuning of the joint coding modulation model, online-learning fine tuning of the pilot frequency design and insertion module, and online-learning fine tuning of the joint coding modulation model and the pilot frequency design and insertion module jointly, which will be elaborated in the following description.

In the communication system of the above embodiment, an online learning fine-tuning process is performed for the channel compression model, while both the joint coding modulation module and the pilot frequency design and insertion model still adopt an existing signal transmission manner rather than are performed the online learning fine-tuning process.

In another embodiment, a mode with a joint coding modulation model online-learning type transmission + a traditional channel feedback.

As shown in FIG. 15, FIG. 15 is a schematic view of a mode with a joint coding modulation model online-learning type transmission + a traditional type channel feedback. An implementation flow under this mode includes steps 151-155.

In a step 151, the transmitter firstly performs a targeted online training fine-tuning process for the joint coding modulation model through the to-be-transmitted source bitstream.

In a step 152, after the joint coding modulation model is fine tuned, the transmitter processes the signal and transmits the signal.

In a step 153, the receiver performs the channel estimation through the channel estimation model.

In a step 154, the receiver performs the compression coding process for the estimated channel information through a compression coding model.

In a step 155, the receiver feeds the compression coded channel information back to the transmitter.

In the communication system of the above embodiment, the online learning fine-tuning process is performed for the joint coding modulation model, while the channel compression model adopts an existing feedback manner, the pilot frequency design and insertion model adopts the existing signal transmission manner, instead of being performed the online learning fine-tuning processes.

In another embodiment: a mode with a pilot frequency design and insertion model online-learning + the traditional type channel feedback

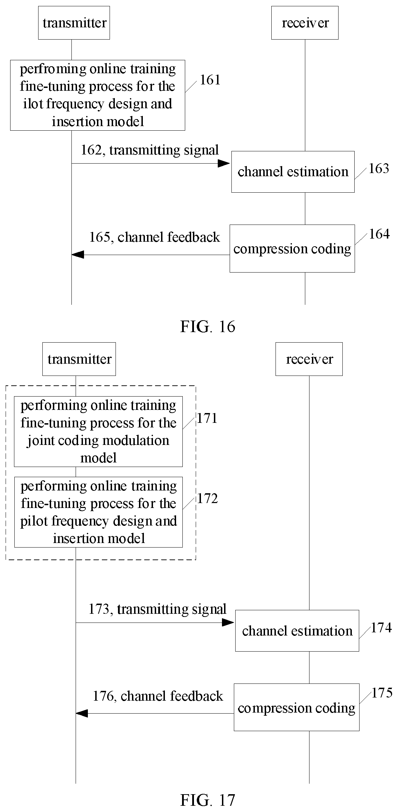

As shown in FIG. 16, FIG. 16 is a schematic view of the mode with the pilot frequency design and insertion model online-learning type transmission + the traditional type channel feedback. An implementation flow under this mode includes steps 161-165.

In a step 161, the transmitter performs the targeted online training fine-tuning process for the pilot frequency design and insertion model through the channel information obtained in the previous channel feedback.

In a step 162, after the transmitter performs the targeted online training fine-tuning process for the pilot frequency design and insertion model, the transmitter processes the signal and transmits the signal.

In a step 163, the receiver performs the channel estimation through the channel estimation model.

In a step 164, the receiver performs the compression coding process for the estimated channel information through the compression coding model.

In a step 165, the receiver feeds the compression coded channel information back to the transmitter.

In the communication system of the above embodiment, the online learning fine-tuning process is performed for the pilot frequency design and insertion model, while the channel compression model adopts the existing feedback manner and the joint coding modulation model adopts the existing signal transmission manner rather than is performed the online learning fine-tuning process.

In another embodiment, a mode with the joint coding modulation model and the pilot frequency design and insertion model joint online learning + the traditional type channel feedback:

As shown in FIG. 17, FIG. 17 is a schematic view of the mode with the joint coding modulation model and the pilot frequency design and insertion model joint online learning + the traditional type channel feedback. An implementation flow of this mode includes steps 171-176.

In a step 171, the transmitter first performs the targeted online training fine-tuning process for the joint coding modulation model with the to-be-transmitted source bitstream.

In a step 172, the transmitter performs the targeted online training fine-tuning process for the pilot frequency design and insertion model with the channel information obtained from previous feedback.

In a step 173, after the transmitter fine tunes a coding modulation model and the pilot frequency design and insertion model, the transmitter processes the signal and transmits the signal.

In a step 174, the receiver performs the channel estimation through the channel estimation model.

In a step 175, the receiver performs the compression coding process for the estimated channel information through the compression coding model.

In a step 176, the receiver feeds the compression coded channel information back to the transmitter.

In the communication system of the above embodiment, the online learning fine-tuning processes are performed for the joint coding modulation model and the pilot frequency design and insertion model, respectively, while the channel compression model adopts the existing feedback manner rather than is performed the online learning fine-tuning process.

In another embodiment: a mode with the joint coding modulation model online learning + a learning type channel feedback:

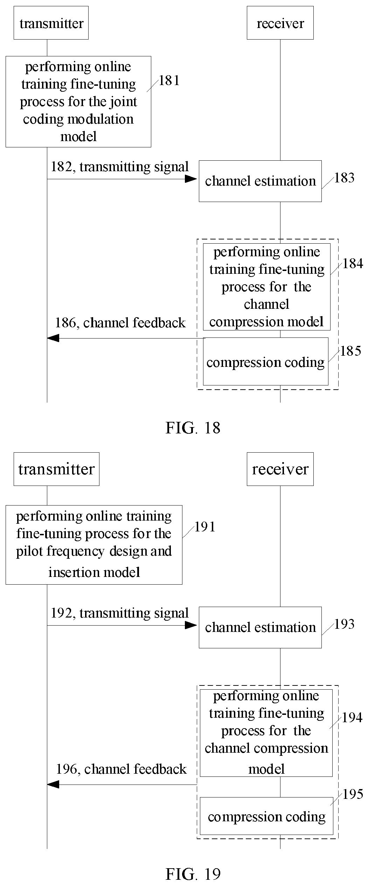

As shown in FIG. 18, FIG. 18 is a schematic view of the mode with the joint coding modulation model online learning + the learning type channel feedback. An implementation flow under this mode includes steps 181-186.

In a step 181, the transmitter first performs the targeted online training fine-tuning process for the joint coding modulation model with the to-be-transmitted bitstream.

In a step 182, after the transmitter fine tunes the joint coding modulation model, the transmitter processes the signal and transmits the signal.

In a step 183, the receiver performs the channel estimation through the channel estimation model.

In a step 184, the receiver performs online training fine-tuning process with the smaller training step for the channel compression model with the estimated channel information.

In a step 185, the receiver performs the channel compression coding process with a fine-tuned channel compression coding model.

In a step 186, the receiver feeds the compression coded channel information back to the transmitter through the feedback link.

In the communication system of the above embodiment, the online learning fine-tuning process is performed for the joint coding modulation model and the online learning fine-tuning process is also performed for the channel compression model, and the learning type channel feedback is employed. The online learning fine-tuning process is not performed for the pilot frequency design and insertion model.

In another embodiment: a mode with the pilot frequency design and insertion model online learning + the learning type channel feedback:

As shown in FIG. 19, FIG. 19 is a schematic view of a mode with the pilot frequency design and insertion model online learning + the learning type channel feedback. An implementation flow under this mode includes steps 191-196.

In a step 191, the transmitter performs the online training fine-tuning process for the pilot frequency design and insertion model with the channel information obtained from the previous channel feedback.

In a step 192, after the transmitter fine tunes the pilot frequency design and insertion model, the transmitter processes the signal and transmits the signal.

In a step 193, the receiver performs the channel estimation through the channel estimation model and obtains the estimated channel information.

In a step 194, the receiver performs the online training fine-tuning process with the smaller training step for the channel compression model with the estimated channel information this time and completes the online learning process.

In a step 195, the receiver performs the compression coding process for the estimated channel information through the fine-tuned channel compression coding model.

In a step 196, The receiver feeds the compression coded channel information back to the transmitter through the feedback link.

In the communication system of the above embodiment, the online learning fine-tuning process is performed for the pilot frequency design and insertion model and the online learning fine-tuning process is also performed for the channel compression model, respectively, and the learning type channel feedback is employed. The online learning fine-tuning process is not performed for the joint coding modulation model.

In another embodiment: a mode with the joint coding modulation model and the pilot frequency design and insertion model joint online learning + the learning type channel feedback:

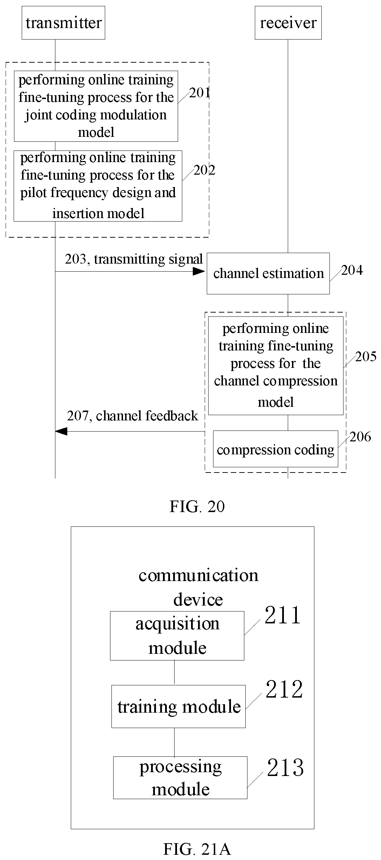

As shown in FIG. 20, FIG. 20 is a schematic view of the mode with the joint coding modulation model and the pilot frequency design and insertion model joint online learning type + the learning type channel feedback. An implementation flow under this mode includes steps 201-207.

In a step 201, the transmitter performs the online training fine-tuning process for the joint coding modulation model with the to-be-transmitted source bitstream.

In a step 202, the transmitter performs the online training fine-tuning process for the pilot frequency design and insertion model with the channel information obtained from the previous feedback.

In a step 203, the transmitter processes the signal and transmits the signal through a fine-tuned pilot frequency design and insertion model.

In a step 204, the receiver performs the channel estimation through the channel estimation model and obtains the estimated channel information.

In a step 205, the receiver performs the online training fine-tuning process with the smaller training step for the channel compression model with the estimated channel information and completes the online learning process.

In a step 206, the receiver performs the channel compression coding process for the estimated channel information through the fine-tuned channel compression coding model.

In a step 207, the receiver feeds the compression coded channel information back to the transmitter through the feedback link.

In the communication system of the above embodiment, the online learning fine-tuning processes are performed for both the joint coding modulation model and the pilot frequency design and insertion model, respectively, and an online-learning type signal processing manner is employed. The online learning fine-tuning process is performed for the channel compression model, and the learning type channel feedback manner is employed.

In addition to the embodiments illustrated in the above, other embodiments may be possible.

In an embodiment, in the communication system, the joint coding modulation model, the pilot frequency design and insertion model, the channel estimation model, and the channel compression model may all employ the online learning manner. A specific flow may include that the transmitter performs the online training fine-tuning process for the joint coding modulation model with the to-be-transmitted source bitstream, and performs the online training fine-tuning process for the pilot frequency design and insertion model with the channel information obtained from the previous feedback; the transmitter processes the signal and transmits the signal through the fine-tuned joint coding modulation model and the fine-tuned pilot frequency design and insertion model; the receiver performs the online training fine-tuning process for the channel estimation model, and performs the channel estimation through the fine-tuned channel estimation model and obtains the estimated channel information; the receiver performs the online training fine-tuning process with the smaller training step for the channel compression model with the estimated channel information and completes the online learning process; the receiver performs the channel compression coding process for the estimated channel information through the fine-tuned channel compression model; and the receiver feeds the compression coded channel information back to the transmitter through the feedback link.

In another embodiment, in the communication system, the joint coding modulation model may be divided into a coding model and a modulation model to be performed the online training fine-tuning processes, respectively. Both the pilot frequency design and insertion model and the channel compression model employ the online learning manner. A specific flow may include that the transmitter performs the online training fine-tuning process for a coding module with the to-be-transmitted source bitstream, and inputs the source bitstream into a fine-tuned coding module and obtains a coded signal; the transmitter performs the online training fine-tuning process for the modulation model with the coded signal and obtains a fine-tuned modulation model, and performs the online training fine-tuning process for the pilot frequency design and insertion model with the channel information obtained from the previous feedback; the transmitter processes the signal and transmits the signal through the fine-tuned coding model, the fine-tuned modulation model, and the fine-tuned pilot frequency design and insertion model; the receiver performs the channel estimation through the channel estimation model and obtains the estimated channel information; the receiver performs the online training fine-tuning process with the smaller training step for the channel compression model with the estimated channel information and completes the online training process; the receiver performs the channel compression coding process for the estimated channel information through the fine-tuned channel compression coding model; and the receiver feeds the compression coded channel information back to the transmitter through the feedback link.

According to schemes of multiple embodiments, in the communication system, a part of or all neural network models of various models (i.e., the joint coding modulation model, the coding model, the modulation model, the pilot frequency design and insertion model, the pilot frequency design model, the pilot frequency insertion model, the channel decompression model, the channel compression model, the channel estimation model, the demodulation decoding model, the demodulation model, the decoding model, the transmitter model, and the receiver model) may be selected according to actual delay requirements, computational complexity requirements, and communication scenarios to perform the online learning process, such that a signal transmission manner may be more flexible, and a more flexible and adjustable communication system may be provided.

As shown in FIG. 21A, a communication device is provided in some embodiments of the present disclosure. The communication device includes an acquisition module 211, a training module 212, and a processing module 213.

The acquisition module 211 is configured to acquire a to-be-processed signal.

The training module 212 is configured to take the to-be-processed signal as an input and a label of a signal processing model, perform an online training fine-tuning process for the signal processing model, and obtain an optimized signal processing model.

The processing module 213 is configured to input the to-be-processed signal into the optimized signal processing model, and obtaining a target signal output by the optimized signal processing model.

In some embodiments, the communication device is preconfigured with a channel simulation module and a target processing module, the target processing module is configured to simulate an opposite side device of the communication device to restore the to-be-processed signal, the channel simulation module is configured to simulate a channel environment, and a signal output by the communication device being transmitted to the target processing module through the channel simulation module.

In some embodiments, the signal processing model includes at least one of a joint coding modulation model; a coding model; a modulation model; a pilot frequency design and insertion model; a pilot frequency design model; a pilot frequency insertion model; a channel decompression model; a channel compression model; a channel estimation model; a demodulation decoding model; a demodulation model; a decoding model; a transmitter model; and a receiver model.

In some embodiments, the training module 212 is configured to, in response to a first parameter satisfying a preset condition, take the to-be-processed signal as the input and the label of the signal processing model, perform the online training fine-tuning process for the signal processing model, and obtain the optimized signal processing model.

The first parameter includes at least one of a channel parameter variation value, a delay requirement of the communication device, and a computational complexity requirement of the communication device.

In some embodiments, the communication device is a receiver, the signal processing model is a channel compression model, and the to-be-processed signal is first channel information obtained through channel estimation.

The training module 212 is configured to take the first channel information as the input and the label of the channel compression model, perform the online training fine-tuning process for the channel compression model, and obtain an optimized channel compression model.

In some embodiments, the processing module 213 is configured to input the first channel information into the optimized channel compression model, and perform a channel compression coding process through the optimized channel compression model, and acquire second channel information output by the optimized signal processing model.

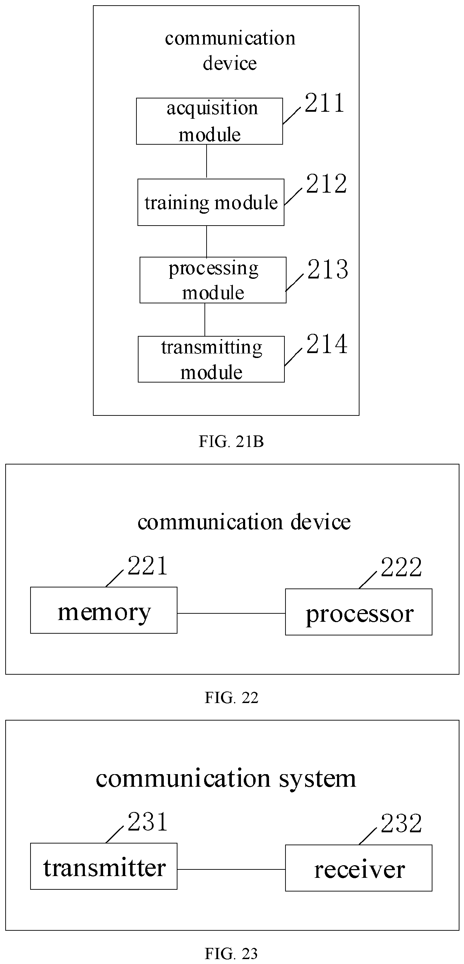

In some embodiments, in combination with FIG. 21A and FIG. 21B, the communication device may further include a transmitting module 214. The transmitting module is configured to transmit the second channel information to a transmitter after the processing module 213 acquires compression coded channel information output by the optimized signal processing model.

In some embodiments, the target processing module is configured to simulate a channel decompression model in the transmitter.

In some embodiments, the target processing module has the same structure and parameter with the channel decompression model in the transmitter.

In some embodiments, the communication device is the transmitter, the signal processing model is a joint coding modulation model, and the to-be-processed signal is a source bitstream.

The processing module 213 is configured to take the source bitstream as the input and the label of the joint coding modulation model, perform the online training fine-tuning process for the j oint coding modulation model, and obtain an optimized j oint coding modulation model

In some embodiments, the target processing module is configured to simulate the receiver corresponding to the transmitter.

In some embodiments, the target processing module has the same structure and parameter as the receiver.

In some embodiments, the processing module 213 is configured to input the source bitstream into the optimized joint coding modulation model; perform a channel coding process and a signal modulation process for the source bitstream through the optimized joint coding modulation model; and acquire a modulation signal output by the optimized joint coding modulation model.

In some embodiments, the training model 212 is further configured to, after the source bitstream is taken as the input and the label of the joint coding modulation model, and the online training fine-tuning process is performed for the joint coding modulation model and the optimized joint coding modulation model is obtained, input a modulation signal and historical channel information into a pilot frequency design and insertion model, take the historical channel information as a label of the pilot frequency design and insertion model, and perform the online training fine-tuning process for the signal processing model and obtain an optimized pilot frequency design and insertion model.

In some embodiments, as shown in FIG. 21A and FIG. 21B, the communication device may further include the transmitting module 214. The processing module 213 is further configured to obtain a transmitting signal after a pilot frequency design and insertion process is performed for the modulation signal. The transmitting module 214 is configured to transmit the transmitting signal to the receiver.

In some embodiments, the communication device is the transmitter, the signal processing model is the pilot frequency design and insertion model, and the to-be-processed signal is historical channel information fed back by a feedback link.

The training module 212 is configured to input the modulation signal and the historical channel information into the pilot frequency design and insertion model, take the historical channel information as the label of the pilot frequency design and insertion model, perform the online training fine-tuning process for the pilot frequency design and insertion model and obtain the optimized pilot frequency design and insertion model.

In some embodiments, the historical channel information is the channel information fed back by the feedback link in the $n^{th}$ transmission period prior to a current transmission period, and n is greater than or equal to 1.

In some embodiments, the target processing module is configured to simulate a transmission module of a receiver from pilot frequency insertion to channel estimation.

In some embodiments, the target processing module has the same structure and parameter with the transmission module of the receiver from the pilot frequency insertion to the channel estimation.

In some embodiments, the processing module 213 is configured to input the modulation signal and the historical channel information into the optimized pilot frequency design and insertion model; perform a pilot frequency design and insertion process for a coding modulated bitstream through the optimized pilot frequency design and insertion model; and acquire pilot frequency information output by the optimized pilot frequency design and insertion model. The pilot frequency information includes a pilot frequency sequence and a position code corresponding to each symbol of the pilot frequency sequence.

As shown in FIG. 22, a communication device is provided.

The communication device includes a memory 221 and a processor 222 coupled to the memory. The memory 221 stores executable program codes 221.

The processor 222 is configured to acquire a to-be-processed signal; take the to-be-processed signal as an input and a label of a signal processing model, perform an online training fine-tuning process for the signal processing model, and obtain an optimized signal processing model; and input the to-be-processed signal into the optimized signal processing model, and obtain a target signal output by the optimized signal processing model.

In some embodiments, the communication device is preconfigured with a channel simulation module and a target processing module, the target processing module is configured to simulate an opposite side device of the communication device to restore the to-be-processed signal, the channel simulation module is configured to simulate a channel environment, and a signal output by the communication device is transmitted to the target processing module through the channel simulation module.

In some embodiments, the signal processing model includes at least one of a joint coding modulation model; a coding model; a modulation model; a pilot frequency design and insertion model; a pilot frequency design model; a pilot frequency insertion model; a channel decompression model; a channel compression model; a channel estimation model; a demodulation decoding model; a demodulation model; a decoding model; a transmitter model; and a receiver model.

In some embodiments, the processor 222 is configured to, in response to a first parameter satisfying a preset condition, take the to-be-processed signal as the input and the label of the signal processing model, perform the online training fine-tuning process for the signal processing model, and obtain the optimized signal processing model.

The first parameter includes at least one of a channel parameter variation value, a delay requirement of the communication device, and a computational complexity requirement of the communication device.

In some embodiments, the communication device is a receiver, the signal processing model is a channel compression model, and the to-be-processed signal is first channel information obtained through channel estimation.

The processor 222 is configured to take the first channel information as the input and the label of the channel compression model, perform the online training fine-tuning process for the channel compression model, and obtain an optimized channel compression model.

In some embodiments, the processor 222 is configured to input the first channel information into the optimized channel compression model, and perform a channel compression coding process through the optimized channel compression model, and acquire second channel information output by the optimized signal processing model.

In some embodiments, the processor 222 is configured to transmit the second channel information to a transmitter after acquiring compression coded channel information output by the optimized signal processing model.

In some embodiments, the target processing module is configured to simulate a channel decompression model in a transmitter.

In some embodiments, the target processing module has the same structure and parameter with the channel decompression model in the transmitter.

In some embodiments, the communication device is a transmitter, the signal processing model is a joint coding modulation model, and the to-be-processed signal is a source bitstream.

The processor 222 is configured to take the source bitstream as the input and the label of the joint coding modulation model, perform the online training fine-tuning process for the joint coding modulation model, and obtain an optimized joint coding modulation model.

In some embodiments, the target processing module is configured to simulate a receiver corresponding to the transmitter.

In some embodiments, the target processing module has the same structure and parameter as the receiver.

In some embodiments, the processor 222 is configured to input the source bitstream into the optimized joint coding modulation model; perform a channel coding process and a signal modulation process for the source bitstream through the optimized joint coding modulation model; and acquire a modulation signal output by the optimized joint coding modulation model.

In some embodiments, after taking the source bitstream as the input and the label of the joint coding modulation model, performing the online training fine-tuning process for the joint coding modulation model, and obtaining the optimized joint coding modulation model, the processor 222 is further configured to input a modulation signal and historical channel information into a pilot frequency design and insertion model, take the historical channel information as a label of the pilot frequency design and insertion model, and perform the online training fine-tuning process for the signal processing model and obtain an optimized pilot frequency design and insertion model.

In some embodiments, the processor 222 is configured to obtain a transmitting signal after a pilot frequency design and insertion process is performed for the modulation signal, and transmit the transmitting signal to a receiver.

In some embodiments, the communication device is a transmitter, the signal processing model is a pilot frequency design and insertion model, and the to-be-processed signal is historical channel information fed back by a feedback link.

In some embodiments, the processor 222 is configured to input a modulation signal and the historical channel information into the pilot frequency design and insertion model, take the historical channel information as the label of the pilot frequency design and insertion model, perform the online training fine-tuning process for the pilot frequency design and insertion model and obtain an optimized pilot frequency design and insertion model.

In some embodiments, the historical channel information is the channel information fed back by the feedback link in the $n^{th}$ transmission period prior to a current transmission period, and n is greater than or equal to 1.

In some embodiments, the target processing module is configured to simulate a transmission module of a receiver from pilot frequency insertion to channel estimation.

In some embodiments, the target processing module has the same structure and parameter with the transmission module of the receiver from the pilot frequency insertion to the channel estimation.

In some embodiments, the processor 222 is configured to input the modulation signal and the historical channel information into the optimized pilot frequency design and insertion model; perform a pilot frequency design and insertion process for a coding modulated bitstream through the optimized pilot frequency design and insertion model; and acquire pilot frequency information output by the optimized pilot frequency design and insertion model, and the pilot frequency information comprising a pilot frequency sequence and a position code corresponding to each symbol of the pilot frequency sequence.

As shown in FIG. 23, a communication system is provided in the embodiments of the present disclosure and includes a transmitter 231 and a receiver 232.

The transmitter 231 is configured to implement processes involved by the communication device or the transmitter in the method embodiments described above. The receiver 232 is configured to implement processes involved by the communication device or the receiver in the method embodiments described above.

A computer-readable storage medium is further provided in some embodiments of the present disclosure and includes computer instructions. When the computer instructions are run on a processor, the processor is caused to perform the processes of the communication device in the method embodiments described above.

A computer program product is further provided in some embodiments of the present disclosure and includes computer instructions. When the computer program product is un on a processor, the computer instructions are run to implement the processes of the communication device in the method embodiments described above.

A chip is further provided in some embodiments of the present disclosure. The chip is coupled to a memory in the communication device to enable the chip to call program instructions stored in the memory during running, and the communication device is caused to implement t the processes of the communication device in the method embodiments described above.

The above embodiments may be achieved in whole or in part through a software, a hardware, a firmware, or any combination thereof. When implemented by the software, it may be implemented in whole or in part in a form of a computer program product. The computer program product includes one or more computer instructions. When the computer instructions are loaded and executed in a computer, a flow or function described in accordance with the embodiments of the present disclosure is generated in whole or in part. The computer may be a general-purpose computer, a specialized computer, a computer network, or other programmable devices. The computer instructions may be stored in a computer-readable storage medium or transmitted from one computer-readable storage medium to another computer-readable storage medium. For example, the computer instructions may be transmitted from a website site, a computer, a server, or a data center to another website site, another computer, another server, or another data center in a wired manner (e.g., a coaxial cable, a fiber optic, and a digital subscriber line (DSL)) or a wireless manner (e.g., infrared, wireless, microwave, etc.). The computer-readable storage medium may be any available medium storable in the computer or a data storage device such as the server, the data center, etc., integrated by one or more available media. The available medium may be a magnetic medium (e.g., a floppy disk, a hard disk, a magnetic tape), an optical medium (e.g., DVD), or a semiconductor medium (e.g., a Solid State Disk (SSD)), etc.

Terms "first", "second", "third", and "fourth", etc. in the specification and claims of the present disclosure and in the accompanying drawings above (when existing therein) are configured to distinguish similar objects and are not necessary to be configured to describe a particular order or sequence. It should be understood that data such used may be interchangeable in an appropriate case, such that the embodiments described herein may be implemented in an order other than that illustrated or described herein. In addition, the terms "include" and "comprise" and any variations thereof are intended to cover non-exclusive inclusion. For example, a process, method, system, product, or apparatus including a series of steps or units are not necessary to be limited to those steps or units which are clearly listed, but may include those steps or units which are not clearly listed, or other steps or units inherent to the above process, method, product, or device.

**Claims**

1. A signal processing method, performed by a communication device, comprising:

    acquiring a to-be-processed signal;

    taking the to-be-processed signal as an input and a label of a signal processing model, performing an online training fine-tuning process for the signal processing model, and obtaining an optimized signal processing model; and
    inputting the to-be-processed signal into the optimized signal processing model, and obtaining a target signal output by the optimized signal processing model.

2. The method according to claim 1, further comprising: the communication device being preconfigured with a channel simulation module and a target processing module, the target processing module being configured to simulate an opposite side device of the communication device to restore the to-be-processed signal, the channel simulation module being configured to simulate a channel environment, and a signal output by the communication device being transmitted to the target processing module through the channel simulation module.

3. The method according to claim 1 or 2, wherein the signal processing model comprises at least one of:

    a joint coding modulation model;
    a coding model;
    a modulation model;
    a pilot frequency design and insertion model;
    a pilot frequency design model;
    a pilot frequency insertion model;
    a channel decompression model;
    a channel compression model;
    a channel estimation model;
    a demodulation decoding model;
    a demodulation model;
    a decoding model;
    a transmitter model; and
    a receiver model.

4. The method according to any one of claims 1 to 3, wherein the taking the to-be-processed signal as an input and a label of a signal processing model, performing an online training fine-tuning process for the signal processing model, and obtaining an optimized signal processing model, comprises:

    in response to a first parameter satisfying a preset condition, taking the to-be-processed signal as the input and the label of the signal processing model, performing the online training fine-tuning process for the signal processing model, and obtaining the optimized signal processing model;
    wherein the first parameter comprises at least one of:
    a channel parameter variation value, a delay requirement of the communication device, and a computational complexity requirement of the communication device.

5. The method according to any one of claims 1 to 4, wherein the communication device is a receiver, the signal processing model is a channel compression model, and the to-be-processed signal is first channel information obtained through channel estimation; wherein the taking the to-be-processed signal as an input and a label of a signal processing model, performing an online training fine-tuning process for the signal processing model, and obtaining an optimized signal processing model, comprises:
taking the first channel information as the input and the label of the channel compression model, performing the online training fine-tuning process for the channel compression model, and obtaining an optimized channel compression model.

6. The method according to claim 5, wherein the inputting the to-be-processed signal into the optimized signal processing model, and obtaining a target signal output by the optimized signal processing model, comprises:
inputting the first channel information into the optimized channel compression model, and performing a channel compression coding process through the optimized channel compression model, and acquiring second channel information output by the optimized signal processing model.

7. The method according to claim 5, wherein after the acquiring compression coded channel information output by the optimized signal processing model, the method further comprises:
transmitting second channel information to a transmitter.

8. The method according to claim 5, wherein the target processing module is configured to simulate a channel decompression model in a transmitter.

9. The method according to claim 8, wherein the target processing module has the same structure and parameter with the channel decompression model in the transmitter.

10. The method according to any one of claims 1 to 4, wherein the communication device is a transmitter, the signal processing model is a joint coding modulation model, and the to-be-processed signal is a source bitstream;
wherein the taking the to-be-processed signal as an input and a label of a signal processing model, performing an online training fine-tuning process for the signal processing model, and obtaining an optimized signal processing model, comprises:
taking the source bitstream as the input and the label of the joint coding modulation model, performing the online training fine-tuning process for the joint coding modulation model, and obtaining an optimized joint coding modulation model.

11. The method according to claim 10, wherein the target processing module is configured to simulate a receiver corresponding to the transmitter.

12. The method according to claim 11, wherein the target processing module has the same structure and parameter as the receiver.

13. The method according to claim 10, wherein after the taking the source bitstream as the input and the label of the joint coding modulation model, performing the online training fine-tuning process for the joint coding modulation model, and obtaining an optimized joint coding modulation model, the method further comprises:

inputting the source bitstream into the optimized joint coding modulation model;
performing a channel coding process and a signal modulation process for the source bitstream through the optimized joint coding modulation model; and
acquiring a modulation signal output by the optimized joint coding modulation model.

14. The method according to claim 10, wherein after the taking the source bitstream as the input and the label of the joint coding modulation model, performing the online training fine-tuning process for the joint coding modulation model, and obtaining an optimized joint coding modulation model, the method further comprises:
inputting a modulation signal and historical channel information into a pilot frequency design and insertion model, taking the historical channel information as a label of the pilot frequency design and insertion model, and performing the online training fine-tuning process for the signal processing model and obtaining an optimized pilot frequency design and insertion model.

15. The method according to claim 13 or 14, further comprising:

obtaining a transmitting signal after a pilot frequency design and insertion process is performed for the modulation signal; and
transmitting the transmitting signal to a receiver.

16. The method according to any one of claims 1 to 4, wherein the communication device is a transmitter, the signal processing model is a pilot frequency design and insertion model, and the to-be-processed signal is historical channel information fed back by a feedback link;

wherein the inputting the to-be-processed signal into the optimized signal processing model, and obtaining a target signal output by the optimized signal processing model, comprises:

inputting a modulation signal and the historical channel information into the pilot frequency design and insertion model, taking the historical channel information as the label of the pilot frequency design and insertion model, performing the online training fine-tuning process for the pilot frequency design and insertion model and obtaining an optimized pilot frequency design and insertion model.

17. The method according to claim 16, wherein the historical channel information is the channel information fed back by the feedback link in the $n^{th}$ transmission period prior to a current transmission period, and n is greater than or equal to 1.

18. The method according to claim 16, wherein the target processing module is configured to simulate a transmission module of a receiver from pilot frequency insertion to channel estimation.

19. The method according to claim 18, wherein the target processing module has the same structure and parameter with the transmission module of the receiver from the pilot frequency insertion to the channel estimation.

20. The method according to claim 16, wherein the inputting the to-be-processed signal into the optimized signal processing model, and obtaining the target signal output by the optimized signal processing mode, comprises:

inputting the modulation signal and the historical channel information into the optimized pilot frequency design and insertion model;
performing a pilot frequency design and insertion process for a coding modulated bitstream through the optimized pilot frequency design and insertion model; and
acquiring pilot frequency information output by the optimized pilot frequency design and insertion model, and the pilot frequency information comprising a pilot frequency sequence and a position code corresponding to each symbol of the pilot frequency sequence.

21. A communication device, comprising:

a memory, storing executable program codes; and
a processor, coupled to the memory;
wherein the processor is configured to:

acquire a to-be-processed signal;
take the to-be-processed signal as an input and a label of a signal processing model, perform an online training fine-tuning process for the signal processing model, and obtain an optimized signal processing model; and
input the to-be-processed signal into the optimized signal processing model, and obtain a target signal output by the optimized signal processing model.

22. The communication device according to claim 21, wherein the communication device is preconfigured with a channel simulation module and a target processing module, the target processing module is configured to simulate an opposite side device of the communication device to restore the to-be-processed signal, the channel simulation module is configured to simulate a channel environment, and a signal output by the communication device is transmitted to the target processing module through the channel simulation module.

23. The communication device according to claim 21 or 22, wherein the signal processing model comprises at least one of:

a joint coding modulation model;
a coding model;
a modulation model;
a pilot frequency design and insertion model;
a pilot frequency design model;
a pilot frequency insertion model;
a channel decompression model;
a channel compression model;
a channel estimation model;
a demodulation decoding model;
a demodulation model;
a decoding model;
a transmitter model; and
a receiver model.

24. The communication device according to any one of claims 21 to 23, wherein the processor is configured to, in response to a first parameter satisfying a preset condition, take the to-be-processed signal as the input and the label of the signal processing model, perform the online training fine-tuning process for the signal processing model, and obtain the optimized signal processing model;
wherein the first parameter comprises at least one of: a channel parameter variation value, a delay requirement of the communication device, and a computational complexity requirement of the communication device.

25. The communication device according to any one of claims 21 to 24, wherein the communication device is a receiver, the signal processing model is a channel compression model, and the to-be-processed signal is first channel information obtained through channel estimation;
wherein the processor is configured to take the first channel information as the input and the label of the channel compression model, perform the online training fine-tuning process for the channel compression model, and obtain an optimized channel compression model.

26. The communication device according to claim 25, wherein the processor is configured to input the first channel information into the optimized channel compression model, and perform a channel compression coding process through the optimized channel compression model, and acquire second channel information output by the optimized model.

27. The communication device according to claim 25, wherein the processor is configured to transmit second channel information to a transmitter after acquiring compression coded channel information output by the optimized signal processing model.

28. The communication device according to claim 25, wherein the target processing module is configured to simulate a channel decompression model in a transmitter.

29. The communication device according to claim 28, wherein the target processing module has the same structure and parameter with the channel decompression model in the transmitter.

30. The communication device according to any one of claims 21 to 24, wherein the communication device is a transmitter, the signal processing model is a joint coding modulation model, and the to-be-processed signal is a source bitstream;
wherein the processor is configured to take the source bitstream as the input and the label of the joint coding modulation model, perform the online training fine-tuning process for the joint coding modulation model, and obtain an optimized joint coding modulation model.

31. The communication device according to claim 30, wherein the target processing module is configured to simulate a receiver corresponding to the transmitter.

32. The communication device according to claim 31, wherein the target processing module has the same structure and parameter as the receiver.

33. The communication device according to claim 30, wherein the processor is configured to:

input the source bitstream into the optimized joint coding modulation model;
perform a channel coding process and a signal modulation process for the source bitstream through the optimized joint coding modulation model; and
acquire a modulation signal output by the optimized joint coding modulation model.

34. The communication device according to claim 30, wherein after taking the source bitstream as the input and the label of the joint coding modulation model, performing the online training fine-tuning process for the joint coding modulation model, and obtaining the optimized joint coding modulation model, the processor is further configured to:
input a modulation signal and historical channel information into a pilot frequency design and insertion model, take the historical channel information as a label of the pilot frequency design and insertion model, and perform the online training fine-tuning process for the signal processing model and obtain an optimized pilot frequency design and insertion model.

35. The communication device according to claim 33 or 34, wherein the processor is configured to:

obtain a transmitting signal after a pilot frequency design and insertion process is performed for the modulation signal; and
transmit the transmitting signal to a receiver.

36. The communication device according to any one of claims 21 to 24, wherein the communication device is a transmitter, the signal processing model is a pilot frequency design and insertion model, and the to-be-processed signal is historical channel information fed back by a feedback link;
wherein the processor is configured to input a modulation signal and the historical channel information into the pilot frequency design and insertion model, take the historical channel information as the label of the pilot frequency design and insertion model, perform the online training fine-tuning process for the pilot frequency design and insertion model and obtain an optimized pilot frequency design and insertion model.

37. The communication device according to claim 36, wherein the historical channel information is the channel information fed back by the feedback link in the $n^{th}$ transmission period prior to a current transmission period, and n is greater than or equal to 1.

38. The communication device according to claim 36, wherein the target processing module is configured to simulate a transmission link of a receiver from pilot frequency insertion to channel estimation.

39. The communication device according to claim 36, wherein the target processing module has the same structure and parameter with a transmission module of the receiver from the pilot frequency insertion to the channel estimation.

40. The communication device according to claim 36, wherein the processor is configured to:

input the modulation signal and the historical channel information into the optimized pilot frequency design and insertion model; perform a pilot frequency design and insertion process for a coding modulated bitstream through the optimized pilot frequency design and insertion model; and acquire pilot frequency information output by the optimized pilot frequency design and insertion model, and the pilot frequency information comprising a pilot frequency sequence and a position code corresponding to each symbol of the pilot frequency sequence.

41. A communication device, comprising:

an acquisition module, configured to acquire a to-be-processed signal; a training module, configured to take the to-be-processed signal as an input and a label of a signal processing model, perform an online training fine-tuning process for the signal processing model, and obtain an optimized signal processing model; and a processing module, configured to input the to-be-processed signal into the optimized signal processing model, and obtaining a target signal output by the optimized signal processing model.

42. A communication system, comprising:

a receiver; and a transmitter; wherein the receiver is configured to implement the method as claimed in any one of claims 1 to 9; and/or the transmitter is configured to implement the method as claimed in any one of claims 1 to 4 or any one of claims 10 to 20.

43. A computer-readable storage medium, comprising instructions, wherein when the instructions are run on a processor, the processor is caused to perform the method as claimed in any one of claims 1 to 20.

EP 4 336 408 A1

FIG. 1

FIG. 2

input layer          hidden layer          output layer

FIG. 3

input layer    convolutional    pooling    convolutional    pooling    full connection layer    output layer
               layers           layers     layers           layers

FIG. 4

reference
signal

AI-based channel estimation and
recovery module

result of the
channel
recovery

FIG. 5

deep-
learning
self-encoder

compressed
channel image

Deep
learning
decoder

jointly performing the
deep learning

$28 \times 28 = 784$

channel image

$28 \times 28 = 784$

reconstructed
channel image

FIG. 6

FIG. 7

FIG. 8

FIG. 9

the communication device acquires a to-be-processed signal /101

the communication device takes the to-be-processed signal as an input and a label of a signal processing model, performs an online training fine-tuning process for the signal processing model, and obtains an optimized signal processing model /102

the communication device inputs the to-be-processed signal into the optimized signal processing model, and obtaining a target signal output by the optimized signal processing model /103

FIG. 10

receiving side online learning

transmitting side

$H^*$ → AI channel compression module

feedback link

b_H

AI channel decompression module → $H^{**}$

b_H

AI channel decompression module (receiving side pre-storing in the local) → $H^*$

FIG. 11

tansmitting side online learning

noise w

receiving side

AI-based joint coding modulation module

d

traditional pilot fequency insertion

AI pilot frequency design and insertion module

(P,d)

transmitting signal

Channel H

receiving signal

Y_p

AI channel estimation module

AI-based joint demodulation decoding model

b°

Y_d

noise w`

Channel H``

b

AI-based joint demodulation decoding model

AI channel estimation module

Y`_p

receiving signal

Y`_d

transmitting side pre-storing receiver

FIG. 12

FIG. 13

EP 4 336 408 A1

transmitter

receiver

141, transmitting signals

channel estimation | 142

online training
fine-tuning process
channel
compression model | 143

145, channel feedback

channel
compression coding | 144

FIG. 14

transmitter

receiver

perfroming online
training fine-
tuning process for
the joint coding
modulation model | 151

152, transmitting signal

channel estimation | 153

155, channel feedback

compression coding | 154

FIG. 15

transmitter

receiver

perfroming online training
fine-tuning process for the
ilot frequency design and
insertion model  —161

162, transmitting signal →

channel estimation  —163

← 165, channel feedback

compression coding  —164

**FIG. 16**

transmitter

receiver

performing online training
fine-tuning process for the
joint coding modulation
model  —171

performing online training
fine-tuning process for the
pilot frequency design and
insertion model  —172

173, transmitting signal →

channel estimation  —174

← 176, channel feedback

compression coding  —175

**FIG. 17**

transmitter

receiver

performing online
training fine-tuning
process for the joint
coding modulation
model
/181

182, transmitting signal →

channel estimation /183

performing online
training fine-tuning
process for the
channel
compression model
/184

186, channel feedback ←

compression coding /185

**FIG. 18**

transmitter

receiver

performing online training
fine-tuning process for the
pilot frequency design and
insertion model
/191

192, transmitting signal →

channel estimation /193

performing online
training fine-tuning
process for the
channel compression
model
/194

196, channel feedback ←

compression coding /195

**FIG. 19**

transmitter

receiver

performing online training
fine-tuning process for the
joint coding modulation
model
201

performing online training
fine-tuning process for the
pilot frequency design and
insertion model
202

203, transmitting signal

channel estimation 204

performing online
training fine-tuning
process for the
channel compression
model
205

207, channel feedback

compression coding 206

FIG. 20

communication
device

acquisition
module
211

training module
212

processing
module
213

FIG. 21A

communication
device

acquisition
module /211

training module /212

processing
module /213

transmitting
module /214

FIG. 21B

communication device

/221
memory

/222
processor

FIG. 22

communication system

/231
transmitter

/232
receiver

FIG. 23

## INTERNATIONAL SEARCH REPORT

International application No.

**PCT/CN2021/092232**

### A. CLASSIFICATION OF SUBJECT MATTER

G06N 3/04(2006.01)i

According to International Patent Classification (IPC) or to both national classification and IPC

### B. FIELDS SEARCHED

Minimum documentation searched (classification system followed by classification symbols)

G06N; G06K

Documentation searched other than minimum documentation to the extent that such documents are included in the fields searched

Electronic data base consulted during the international search (name of data base and, where practicable, search terms used)

CNKI, CNPAT, WPI, EPODOC: 模型, 优化, 微调, 处理, 信号, 修正, model, optimization, fine tuning, process, signal, correct+

### C. DOCUMENTS CONSIDERED TO BE RELEVANT

| Category* | Citation of document, with indication, where appropriate, of the relevant passages | Relevant to claim No. |
|---|---|---|
| X | CN 111091175 A (BEIJING DIDI INFINITY TECHNOLOGY AND DEVELOPMENT CO., LTD.) 01 May 2020 (2020-05-01)<br>description, paragraphs [0056]-[0181], and figures 2-12 | 1-43 |
| A | CN 110473568 A (GUANGDONG OPPO MOBILE TELECOMMUNICATIONS CORP., LTD. et al.) 19 November 2019 (2019-11-19)<br>entire document | 1-43 |
| A | CN 108932950 A (SOUTH CHINA NORMAL UNIVERSITY) 04 December 2018 (2018-12-04)<br>entire document | 1-43 |
| A | US 2020241874 A1 (SHANGHAI CAMBRICON INFORMATION TECHNOLOGY CO., LTD.) 30 July 2020 (2020-07-30)<br>entire document | 1-43 |

☐ Further documents are listed in the continuation of Box C.      ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **14 January 2022** | **28 January 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

Form PCT/ISA/210 (patent family annex) (January 2015)

**INTERNATIONAL SEARCH REPORT**
Information on patent family members

International application No.

**PCT/CN2021/092232**

| Patent document cited in search report | | | Publication date (day/month/year) | Patent family member(s) | | | Publication date (day/month/year) |
|---|---|---|---|---|---|---|---|
| CN | 111091175 | A | 01 May 2020 | None | | | |
| CN | 110473568 | A | 19 November 2019 | None | | | |
| CN | 108932950 | A | 04 December 2018 | None | | | |
| US | 2020241874 | A1 | 30 July 2020 | CN | 111385462 | A | 07 July 2020 |
| | | | | EP | 3734432 | A1 | 04 November 2020 |
| | | | | CN | 111383637 | A | 07 July 2020 |
| | | | | CN | 111383638 | A | 07 July 2020 |